(19) Europäisches Patentamt
European Patent Office
Office européen des brevets

(11) Publication number : **0 523 112 B1**

(12) # EUROPEAN PATENT SPECIFICATION

(45) Date of publication of patent specification : **22.06.94 Bulletin 94/25**

(51) Int. Cl.$^5$ : **B01F 17/00,** E21B 43/22, // C07C309/10

(21) Application number : **91906965.8**

(22) Date of filing : **02.04.91**

(86) International application number : **PCT/EP91/00615**

(87) International publication number : **WO 91/15289 17.10.91 Gazette 91/24**

(54) **BRANCHED ETHER SURFACTANTS AND THEIR USE IN AN ENHANCED OIL RECOVERY PROCESS.**

(30) Priority : **02.04.90 NO 901491**

(43) Date of publication of application : **20.01.93 Bulletin 93/03**

(45) Publication of the grant of the patent : **22.06.94 Bulletin 94/25**

(84) Designated Contracting States : **DE DK FR GB IT NL**

(56) References cited :
**US-A- 4 446 079**
**US-A- 4 468 335**
**US-A- 4 590 996**

(73) Proprietor : **BEROL NOBEL AB**
**S-444 85 Stenungsund (SE)**
Proprietor : **DEN NORSKE STATS OLJESELSKAP A.S.**
**Postboks 300 Forus**
**N-4001 Stavanger (NO)**

(72) Inventor : **GILJE, Eimund**
**N-4333 Oltedal (NO)**
Inventor : **SONESSON, Clas**
**Sveagatan 16**
**S-413 14 Göteborg (SE)**
Inventor : **HELLBERG, Per-Erik**
**Uppegardsvägen 64**
**S-444 43 Stenungsund (SE)**
Inventor : **HOLMBERG, Krister**
**Dalgangsgatan 17**
**S-431 39 Mölndal (SE)**
Inventor : **SVENNBERG, Stig**
**Vallmovägen 3**
**S-444 45 Stenungsund (SE)**

(74) Representative : **Barz, Peter, Dr. et al**
**Patentanwälte Dipl.-Ing. G. Dannenberg**
**Dr. P. Weinhold, Dr. D. Gudel**
**Dipl.-Ing. S. Schubert, Dr. P. Barz**
**Siegfriedstrasse 8**
**D-80803 München (DE)**

**EP 0 523 112 B1**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a surfactant which forms microemulsions with a very high solubilizing capacity without the use of a cosurfactant. The surfactant and the microemulsion containing said surfactant are suitable for use in enhanced oil recovery.

Microemulsions are made from water, an oil component and a surfactant system. The surfactant system traditionally consists of a true surfactant (hereinafter referred to as "surfactant") and a cosurfactant. The surfactant may be anionic, cationic or amphoteric. The cosurfactant, which is sometimes referred to as a cosolvent or a solubilizing agent, is normally an alkanol having from 3 to 6 carbon atoms, but other types of compounds, such as glycol ethers and amines, may also be used. The cosurfactant is usually a considerably smaller molecule than the surfactant and one of its roles is to affect the molecular packing at the droplet interface in such a way that formation of microemulsion is energetically favoured.

One of the most interesting application areas for microemulsions is surfactant flooding for enhanced oil recovery. Surfactant flooding means injection of a surfactant solution or a microemulsion into a reservoir with a view to decreasing the oil-water interfacial tension and, as a consequence, increasing the amount of oil recovered by flooding.

In high surfactant concentration systems a middle phase microemulsion in equilibrium with excess oil and brine is formed if the surfactant system is well balanced. The existence of the middle phase microemulsion is considered a necessary condition to obtain a satisfactory oil recovery. The microemulsion phase gives an extremely low interfacial tension against brine as well as oil. It has the ability to mobilize oil blocked in narrow pores, it causes coalescence of oil droplets and it ultimately brings about formation of a continuous oil bank which is pushed forward towards the production hole by a water slug.

The formation and preservation of a microemulsion is, consequently, of utmost importance for a successful result in chemical flooding. However, microemulsions are known to be sensitive to changes in composition. They normally only exist within fairly narrow intervals with regard to the surfactant to cosurfactant ratio. During the flooding process a certain degree of separation between the surfactant and the cosurfactant is likely to occur. This separation may be caused either by one of the components adsorbing more strongly to the surface of the formation than the other, or by unequivalent distribution of the two components between the oil and brine phases. A change in composition due to selective precipitation or degradation of one of the components is also conceivable. Consequently, even with well balanced systems showing only minor differences between the components with regard to adsorption and distribution, a gradual change of the composition will take place in chemical flooding and the microemulsion will normally break. Since a microemulsion in chemical flooding is often transported very long distances, the long-term preservation of the optimum system is regarded a major issue.

The problem of component separation can be avoided or reduced by using certain branched surfactants which easily form microemulsions with or without the addition of a cosurfactant. For example, US-A-4 468 335, 4 468 342, and 4 545 912 disclose surfactants with a branched hydrophobic tail and a polar group consisting of a polyethylene glycol chain with a terminal sulfonate group. These surfactants have been shown to form microemulsions also without a cosurfactant and they have a high capacity to solubilize oil and have been suggested for use in enhanced oil recovery.

US-A-4 446 079 discloses a sulfate and sulfonate surfactant of the general formula

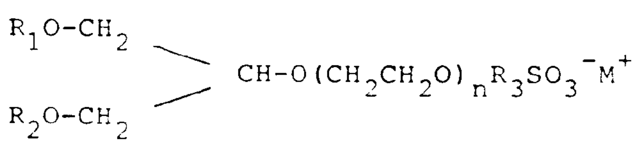

where $R_1$ and $R_2$ are the same or different and are $C_1$-$C_{15}$ hydrocarbyl, $R_3$ is $C_{0-5}$ alkyl, M is a cation and n is a rational number from 2 to 6.

Normally the polyethylene glycol chain consists of 3-5 ethyleneoxy groups to exhibit optimum performance.

Insertion of a polyethylene glycol chain between the sulfate or the sulfonate end group and the 1.3-dialkoxypropyl hydrophobic tail gives a surfactant which has an excellent ability to solubilize oil in the middle phase of a micro-emulsion and also a good tolerance to high concentrations of divalent cations, such as in sea-water. The solubilizing effect is generally considered an essential property of the microemulsion to obtain a high oil recovery.

We have now surprisingly found that when performing surfactant flooding it is particulary advantageous to use surfactants having two alkyl groups, one being a $C_{8-12}$-alkyl and the other a $C_{2-6}$-alkyl. Surfactants having this structure have superior properties in comparison with the surfactants disclosed in the working examples of US-A-4 446 079, where the alkyl groups have the same number of carbon atoms.

The surfactants of the present invention may be illustrated by the following general formula

$$\begin{array}{l} R_3 - (O)_{m_1} - CH_2 \\ R_4 - (O)_{m_2} - CH_2 \end{array} \!\!> CH-O-(A)_p - (Y)_r - SO_3H$$

in which $R_3$ is a $C_{8-12}$ alkyl, $R_4$ is a $C_{2-6}$ alkyl, A is an alkyleneoxy group derived from an alkylene oxide having 2-3 carbon atoms, p has an average number of from 2 to 6, Y is an alkylene group having 1-3 carbon atoms and optionally containing a hydroxyl group, $m_1$ and $m_2$ is 0 or 1, both $m_1$ and $m_2$ not being 0 at the same time, and r is 0 or 1, or a salt thereof. Particular preferred surfactants are those having $C_{8-10}$ alkyl and $C_{4-6}$ alkyl. Examples of suitable alkyl groups are octyl, nonyl, decyl and their isomers and 2-ethylhexyl and tripropyl. Other suitable alkyl groups are 2-methylpropyl, 1-butyl, 2-methylbutyl, 1-pentyl and 1-hexyl Both $m_1$ and $m_2$ are preferably 1, while Y is preferably an alkylene group having 2-3 carbon atoms. When used at a high temperature, e.g. above 70°C, and for a long fluid distance, compounds are preferred where r is 1. The alkyleneoxy groups are preferably ethyleneoxy groups or a mixture of ethyleneoxy groups and propyleneoxy groups, the number of ethyleneoxy groups being preferably from 2-4. The salt is normally an alkali metal salt but the ammonium salt or an organic ammonium salt is also suitable.

The present surfactants are more useful for surfactant flooding than the previously described surfactants since they are not as sensitive to variations in salinity, temperature and equivalent alkane carbon number of the oil. In practice, such an insensitivity is necessary, at least in large scale operations, such as in off-shore flooding, since the conditions in the reservoir vary considerably.

When injecting an aqueous solution of the novel surfactants into an oil reservoir they will form a large middle phase microemulsion in equilibrium with excess oil and brine. At equilibrium the surfactants are mainly localized in the middle phase microemulsion and their concentration in both the brine phase and the oil phase is very low. This is a necessary condition to keep the need of surfactants on a low level. Preferably, the surfactants are used without any cosurfactants, but the use of additional surfactants and cosurfactants are also within the scope of this invention. In order to increase the solubility of the surfactants in the aqueous injection media, the surfactants could be added in the form of an inorganic or organic ammonium salt or combined with a solubilizing agent, such as a lower alcohol or a lower ethylene glycol monoalkyl ether.

The surfactants of the present invention can be prepared by known synthesis methods. Typical procedures are outlined below:

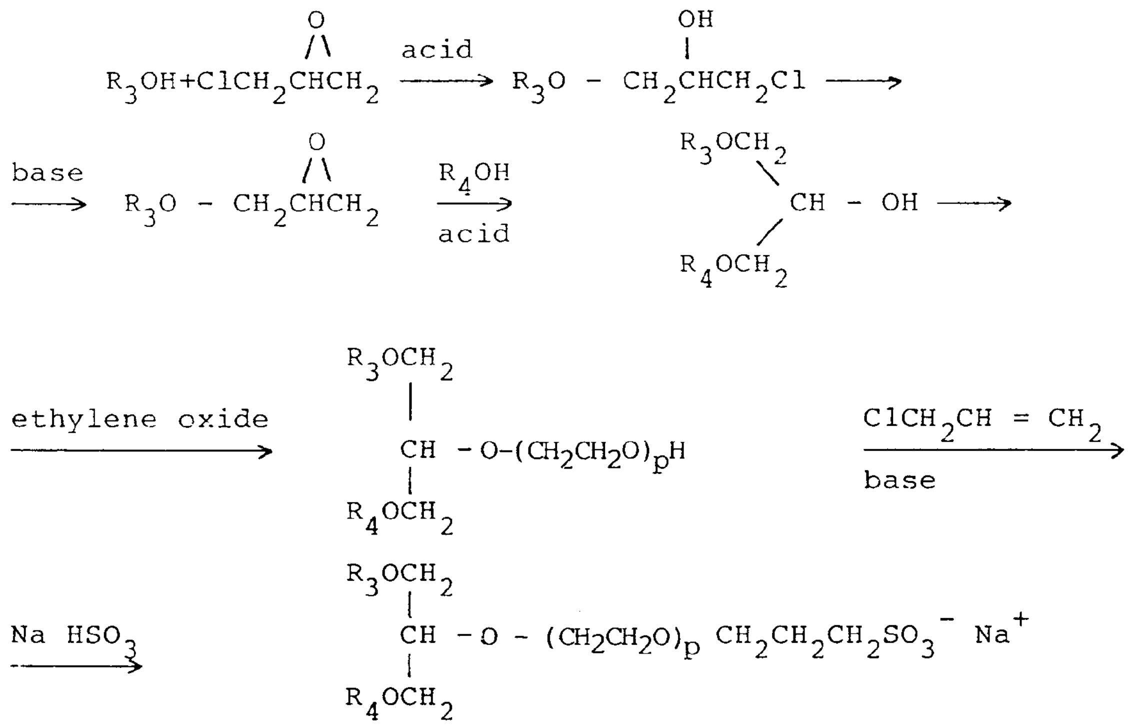


In the formula above, $R_3$, $R_4$ and p have the meaning earlier mentioned.

As an alternative, the ethoxylate intermediate can be reacted with epichlorohydrin or thionyl chloride followed by a reaction with a sulphite salt.

In order to prepare compounds of the general formula above in which $m_1$ or $m_2$ is 0, the corresponding $\alpha$ -olefin oxide may be used as starting material. The first reaction step is then:

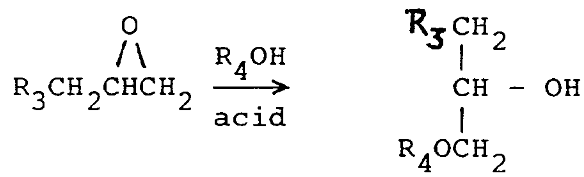


or

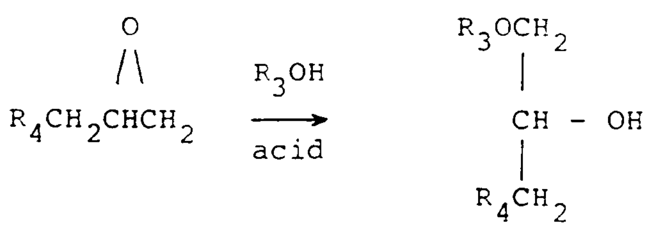


Sulfates may be produced by reaction of the ethnxylate intermediate and $SO_3$.

The invention is further illustrated by the examples below.

Example 1

Two surfactants of the present invention were prepared and compared in flooding experiments with a surfactant of the previously known type with a higher number of ethyleneoxy groups.

The novel surfactants were the following:

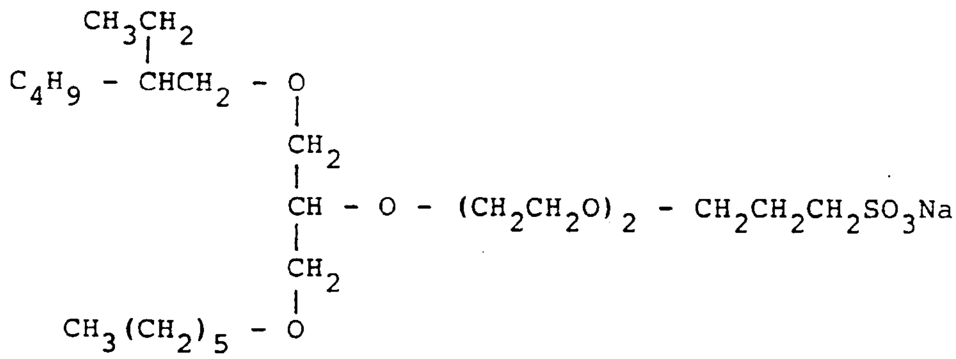

(1)

and

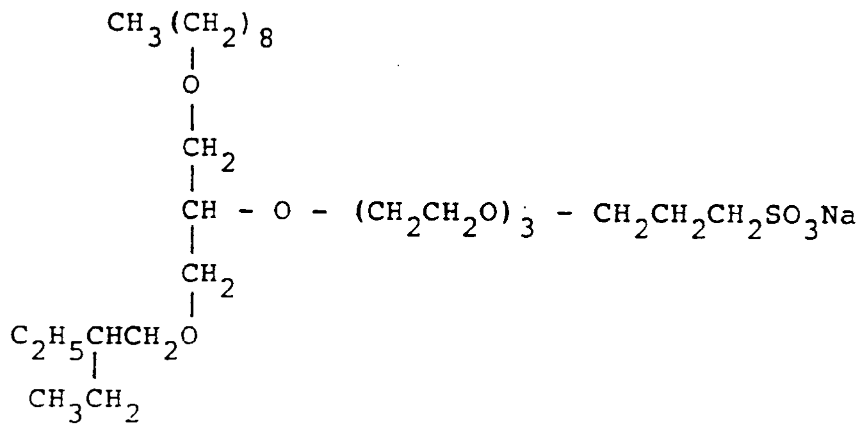

(2)

The previously known surfactant used for comparison was

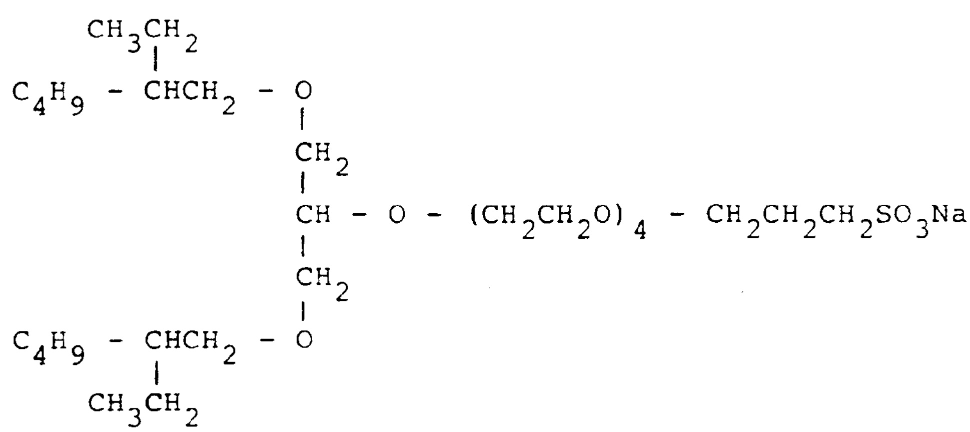

(3)

The surfactants were all prepared according to the general procedure given above. A detailed description of the synthesis is given below for surfactant No. 1. The other two surfactants were prepared analogously.

(Step 1)

Epichlorohydrin is added dropwise to 2-ethylhexanol catalysed with 1% (by weight) of $SnCl_4$ at 70°C.

(Step 2)

1.5 Equivalents of NaOH is added dropwise as a 30% aqueous solution to the chloroglyceryl ether formed in Step 1 under vigorous stirring at 80°C. After completed addition, the reaction mixture is kept at 80°C and

the formation of product is monitored by repeated titrations of epoxide content in the organic phase. After completed reaction, agitation is stopped and the organic and aqueous layers are carefully separated.

(Step 3)

The glycidol ether formed in Step 2 is reacted with 1-hexanol in an analogous procedure to that described in Step 1. 1-(2-ethylhexyl)-3-hexylglycerol is formed.

(Step 4)

The secondary alcohol of Step 3 is reacted with 2 eq. of ethylene oxide per mole of alcohol. The reaction temperature is kept at 70°C and $SnCl_4$ (1% by weight) is used as catalyst.

(Step 5)

The ethoxylate of Step 4 is mixed with allyl chloride (1 eq.), cetyltriethylammonium bromide (0.05 eq.), solid NaOH (2 eq.) and water (0.30 eq.). The vigorously stirred reaction mixture is heated at 40°C for 5 h and then at 70°C for 3 h, giving the allyl ether which is freed from salts by filtration.

(Step 6)

The allyl ether of Step 5 is charged portionwise to a 200 ml solution of tetrabutylammonium hydrogen sulphate (0.1 eq.) in a 65:35 mixture (by volume) of 2-propanol and water buffered at pH 8. An aqueous saturated solution of sodium hydrogen sulphite (1.1 eq.) is added dropwise at 50°C under a continuous oxygen purge. When the addition is completed, the mixture is left under stirring at 50°C for 8 h. The disappearance of allyl ether is monitored by $^1H$ - NMR analysis. After completed reaction, water and 2-propanol are added, the aqueous layer is saturated with $Na_2CO_3$ at 60°C, the phases are separated and the organic phase concentrated by rotary evaporation to yield the desired sulphonate. The active content of the product is typically around 80%.

The degree of ethoxylation of surfactant No. 3 was chosen so that it was optimally balanced for the test system used.

In the flooding experiments a 1:1 mixture of nonane and decane was used as model oil, the aqueous component was sea-water and the core temperature was 70°C. All three surfactants gave three phase systems under these conditions with a middle phase microemulsion in equilibrium with excess oil and water. The symmetrical surfactant 3, however, gave a very high viscous middle phase. On addition of an alcohol, such as 2-butanol, the viscosity of the system was considerably reduced.

Table 1 shows the solubilization parameters and the salinity windows of the three surfactants. The solubilization parameter is widely used as a measure of solubilizing power of the surfactant. It is defined as the amount of oil (or water) solubilized in the middle phase divided by the amount of surfactant used at the point of equal solubilization of oil and water. The salinity window is given in sea-water equivalents, i.e. multiples of synthetic sea-water.

Table 1

| Surfactant | Solubilization parameter | Salinity window |
|---|---|---|
| 1 | 18 | 0.8-1.2 |
| 2 | 19 | 0.8-1.3 |
| 3 | 20 (gel-like) | 1.0 (gel-like) |
| 3 + 2-butanol | 18 | 0.9-1.0 |

As can be seen from Table 1, surfactants 1 and 2 do not give larger solubilization parameter than surfactant

No. 3. However, their salinity window is much larger. Surfactant No. 3 gives a viscosity of the middle phase too high to be of practical interest unless alcohol is added. Weight ratio of alcohol to surfactant is 2:1.

Flooding experiments were performed in a Berea sandstone core of 28.8 cm length and a diameter of 3.75 cm. The permeability was 520 mD, the core was oriented vertically, the overburden pressure applied was 40 bar and the back-pressure 20 bar.

The core having a residual oil saturation of 40% was flooded with sea-water (1.7 pore volumes), a 2% solution of surfactant in sea-water (0.5 pore volumes), a polymer solution (0.5 pore volumes) and, finally, sea-water (1.7 pore volumes). Table 2 shows the effect of the three surfactants tested in terms of total oil recovery.

Table 2

| Surfactant | Oil recovery (%) |
|---|---|
| 1 | 90 |
| 2 | 86 |
| 3 | 64 |
| 3 + 2-butanol | 77 |

From the results it is evident that the surfactants of the invention are considerably more efficient than the known surfactant in mobilization of model oil from the sandstone core.

Example 2

One sulphate surfactant of the present invention was prepared and compared in flooding experiments with a surfactant of the previously known type.

The novel surfactant was the following:

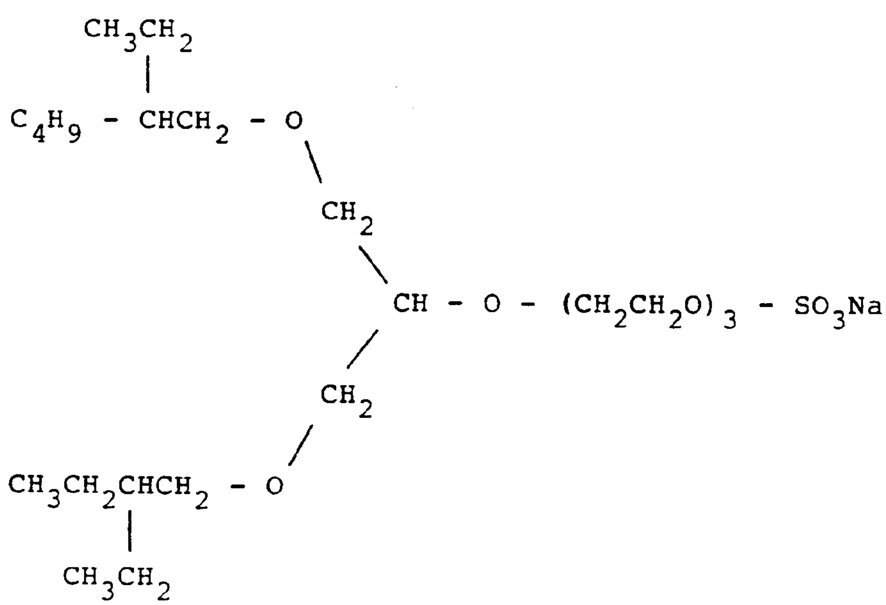

(1)

The previously known surfactant used for comparison was:

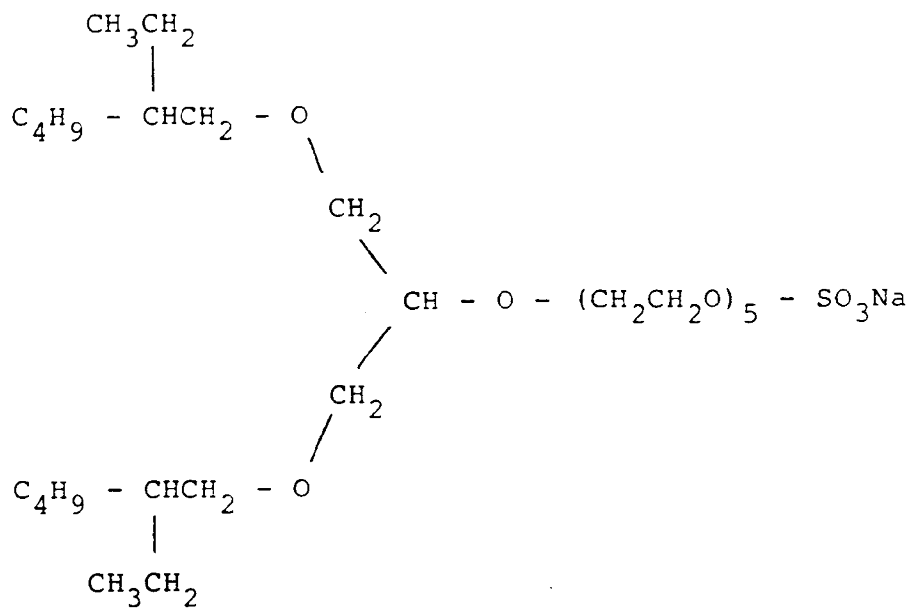

(2)

The surfactants were prepared according to the general procedure given above. The syntheses were run as described by Steps 1-4 of Example 1. The ethoxylate obtained from step 4 was reacted with gaseous $SO_3$ for 1 h at 60°C followed by neutralization with aqueous NaOH. The active content of surfactant 1 was 78% and of surfactant 2, 80%.

The degree of ethoxylation of the surfactants, 3 and 5 respectively, is chosen so that both surfactants are optimally balanced for the test system used.

Flooding experiments were performed in a Berea sandstone core at 70°C using nonane as model oil and sea water as aqueous component. The testing procedure was the same as already given in Example 1.

Both surfactants gave three phase systems under the conditions used with a middle phase microemulsion in equilibrium with excess oil and water. The symmetrical surfactant 2, however, gave a very high viscous middle phase unless an alcohol, such as 2-butanol, was added.

Table 3 shows solubilization parameters and salinity windows of the two surfactants.

Table 3

| Surfactant | Solubilization parameter | Salinity window |
|---|---|---|
| 1 | 22 | 0.6-1.3 |
| 2 | 26 (gel-like) | 1.0 (gel-like) |
| 2 + 2-butanol | 22 | 0.9-1.0 |

As can be seen from Table 3, the novel surfactant No. 1 does not give as large a solubilization parameter as surfactant No. 2. However, its salinity window is much larger. Surfactant No. 2 gives too high a viscosity of the middle phase to be of practical interest unless alcohol is added. The weight ratio of alcohol to surfactant is 2:1.

Table 4 shows the effect of the surfactants tested in core flooding in terms of total- oil recovery.

Table 4

| Surfactant | Oil recovery (%) |
|---|---|
| 1 | 79 |
| 2 | 50 |
| 2 + 2-butanol | 61 |

As can be seen, the surfactant of the invention is considerably more efficient than the known surfactant in mobilization of model oil from the sandstone core.

## Claims

1. A surfactant having the general formula

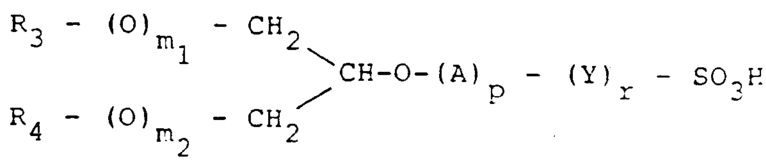

in which $R_3$ is $C_{8-12}$ alkyl, $R_4$ is $C_{2-6}$ alkyl, A is an alkyleneoxy group derived from an alkylene oxide having 2-3 carbon atoms,p has an average number of from 2 to 6, Y is an alkylene group having 1-3 carbon atoms and optionally containing a hydroxyl group, $m_1$ and $m_2$ is 0 or 1, both $m_1$ and $m_2$ not being 0 at the same time, and r is 0 or 1, or a salt thereof.

2. The surfactant according to claim 1, where $R_3$ is $C_{8-10}$ alkyl and $R_4$ is $C_{4-6}$ alkyl.

3. The surfactant according to claim 1 or 2, where $m_1$ and $m_2$ both are 1.

4. The surfactant according to any one of claims 1-3, where r is 1.

5. The surfactant according to claim 4, where Y is an alkylene group containing 2-3 carbon atoms.

6. The surfactant according to any one of claims 1-5, where A is an ethyleneoxy group or the group $(A)_p$ is a mixture of ethyleneoxy groups and propyleneoxy groups, the number of ethyleneoxy groups being 2-4.

7. Use of a surfactant according to any one of claims 1-6 in chemical flooding of an oil well with sea-water.

## Patentansprüche

1. Tensid der allgemeinen Formel

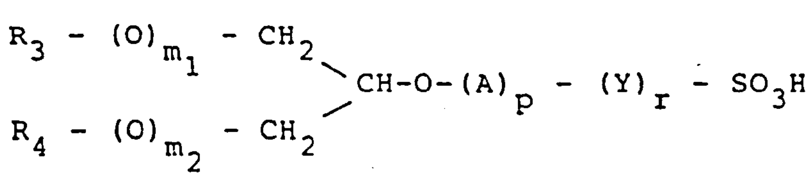

worin $R_3$ $C_{8-12}$ Alkyl ist, $R_4$ $C_{2-6}$ Alkyl ist, A eine von einem Alkylenoxid mit 2-3 Kohlenstoffatomen abgeleitete Alkylenoxygruppe ist, p einen durchschnittlichen Wert von 2 bis 6 hat, Y eine Alkylengruppe mit 1-3 Kohlenstoffatomen ist, die gegebenenfalls eine Hydroxylgruppe enthält, $m_1$ und $m_2$ 0 oder 1 sind, $m_1$ und $m_2$ jedoch nicht beide gleichzeitig 0 sind, und r 0 oder 1 ist, oder ein Salz davon.

2. Tensid nach Anspruch 1, worin $R_3$ $C_{8-10}$ Alkyl ist und $R_4$ $C_{4-6}$ Alkyl ist.

3. Tensid nach Anspruch 1 oder 2, worin $m_1$ und $m_2$ beide 1 sind.

4. Tensid nach irgendeinem der Ansprüche 1-3, worin r 1 ist.

5. Tensid nach Anspruch 4, worin Y eine Alkylengruppe ist, die 2-3 Kohlenstoffatome enthält.

6. Tensid nach irgendeinem der Ansprüche 1-5, worin A eine Ethylenoxygruppe ist oder die Gruppe $(A)_p$ eine Mischung von Ethylenoxygruppen und Propylenoxygruppen ist, wobei die Zahl der Ethylenoxygruppen 2-4 beträgt.

7. Verwendung eines Tensids nach irgendeinem der Ansprüche 1-6 beim chemischen Fluten einer Ölquelle mit Meerwasser.

## Revendications

1. Tensioactif ayant la formule générale :

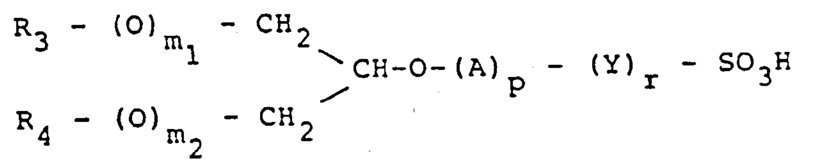

dans laquelle $R_3$ est un groupe alkyle en $C_8$ à $C_{12}$, $R_4$ est un groupe alkyle en $C_2$ à $C_6$, A est un groupe alkylènoxy dérivé d'un oxyde d'alkylène comportant 2 à 3 atomes de carbone, p est un nombre moyen de 2 à 6, Y est un groupe alkylène comportant 1 à 3 atomes de carbone et comprenant en option un groupe hydroxyle, $m_1$ et $m_2$ sont 0 ou 1, $m_1$ et $m_2$ n'étant pas 0 au même moment et r est 0 ou 1, ou l'un de ses sels.

2. Tensioactif selon la revendication 1, dans lequel $R_3$ est un groupe alkyle en $C_8$ à $C_{10}$ et $R_4$ est un groupe alkyle en $C_4$ à $C_6$.

3. Tensioactif selon la revendication 1 ou 2, dans lequel $m_1$ et $m_2$ sont tous deux 1.

4. Tensioactif selon l'une quelconque des revendications 1 à 3, dans lequel r est 1.

5. Tensioactif selon la revendication 4, dans lequel Y est un groupe alkylène contenant 2 à 3 atomes de carbone.

6. Tensioactif selon l'une quelconque des revendications 1 à 5, dans lequel A est un groupe éthylènoxy ou dans lequel le groupe (A)p est un mélange des groupes éthylènoxy et des groupes propylènoxy, le nombre de groupes éthylènoxy étant de 2 à 4.

7. Utilisation d'un tensioactif selon l'une quelconque des revendications 1 à 6 pour le balayage chimique d'un puits de pétrole à l'eau de mer.